(19) **Europäisches Patentamt / European Patent Office / Office européen des brevets**

(11) **EP 1 431 906 B1**

(12) **FASCICULE DE BREVET EUROPEEN**

(45) Date de publication et mention de la délivrance du brevet: **14.02.2007 Bulletin 2007/07**

(51) Int Cl.:
*G06K 9/00* (2006.01)   *G06T 5/00* (2006.01)
*G06T 5/20* (2006.01)

(21) Numéro de dépôt: **03300219.7**

(22) Date de dépôt: **19.11.2003**

(54) **Détermination d'un indice de netteté d'une image numérique**

Bestimmung eines Schärfekennwerts für ein digitales Bild

Determination of a sharpness index of a digital image

(84) Etats contractants désignés:
**DE FR GB IT**

(30) Priorité: **20.11.2002 FR 0214547**

(43) Date de publication de la demande:
**23.06.2004 Bulletin 2004/26**

(73) Titulaire: **STMicroelectronics S.A.**
**92120 Montrouge (FR)**

(72) Inventeurs:
• **Tisse, Christel-Loic**
**13380 Plan de Cuques (FR)**
• **Plaza, Laurent**
**de Champs**
**13090 Aix en Provence (FR)**
• **Petitjean, Guillaume**
**13530 Trets (FR)**

(74) Mandataire: **de Beaumont, Michel**
**1, rue Champollion**
**38000 Grenoble (FR)**

(56) Documents cités:
**US-A- 5 040 228      US-A- 5 953 440**

• **CHOI K-S ET AL: "NEW AUTOFOCUSING TECHNIQUE USING THE FREQUENCY SELECTIVE WEIGHTED MEDIAN FILTER FOR VIDEO CAMERAS" IEEE TRANSACTIONS ON CONSUMER ELECTRONICS, IEEE INC. NEW YORK, US, vol. 45, no. 3, août 1999 (1999-08), pages 820-827, XP000927000 ISSN: 0098-3063**
• **TSANG W H ET AL: "Suppression of false edge detection due to specular reflection in color images" PATTERN RECOGNITION LETTERS, NORTH-HOLLAND PUBL. AMSTERDAM, NL, vol. 18, no. 2, 1 février 1997 (1997-02-01), pages 165-171, XP004057266 ISSN: 0167-8655**

**EP 1 431 906 B1**

**Description**

La présente invention concerne le domaine du traitement d'images numériques et, plus particulièrement les procédés d'identification ou d'authentification à partir d'images numériques de l'oeil.

La reconnaissance d'iris constitue une technique d'identification biométrique parfaitement éprouvée, pourvu que l'image sur laquelle sont appliqués les procédés d'analyse et d'identification soit une image exploitable. En particulier, la performance des algorithmes de reconnaissance dépend fortement de la netteté de l'image de l'iris à identifier.

Or, dans la plupart des applications, et notamment dans les applications dites embarquées (par exemple pour du contrôle d'accès à un téléphone ou ordinateur portable, pour une clé électronique, etc.), la caméra (capteur numérique et lentille) utilisée ne dispose pas de système d'autofocus ajustant la focale (réelle ou simulée) en fonction de la distance.

De plus, pour des raisons de résolution de l'iris qui n'occupe qu'une faible surface de l'oeil, les images sont prises à une distance relativement faible (généralement de l'ordre de 10 à 30 cm). Il en découle une faible profondeur de champ (plage de distances entre la caméra et l'oeil dans laquelle l'image est nette). Cette faible profondeur de champ ajoutée au fait que l'oeil est sphérique peut même engendrer des différences de netteté entre des zones d'une même image d'oeil.

Un traitement préalable à la reconnaissance d'iris proprement dite consiste donc à sélectionner une image suffisamment nette.

Généralement, le dispositif de prise de vues prend un nombre d'images compris entre 5 et 50 et un système de prétraitement sélectionne l'image à soumettre à l'algorithme de reconnaissance proprement dit.

L'évaluation de la netteté revient à attribuer, à chaque image, un indice caractéristique de sa netteté. Cela permet soit de sélectionner une image suffisamment nette par rapport à un seuil déterminé, soit de sélectionner l'image la plus nette parmi les images d'un ensemble. Par convention, plus l'indice attribué à une image est élevé, plus elle est nette.

La présente invention concerne plus particulièrement le prétraitement appliqué à des images d'un même oeil afin de déterminer un indice caractéristique de la netteté de chaque image et, selon un aspect préféré, sélectionner celle de ces images qui est la plus nette.

On a déjà proposé diverses techniques d'évaluation de netteté d'images numériques que ce soit à partir de filtrage, de transformation en ondelettes (WO-A-00/36551), d'analyse fréquentielle (WO-A-00/30525), ou d'analyse des gradients de luminance dans une région centrale des images.

Toutes ces techniques ont pour inconvénient commun d'être lentes, notamment si elles sont mises en oeuvre dans des produits miniaturisés où la capacité de traitement est limitée (clé électronique par exemple). Par lentes, on entend qu'elles sont difficilement compatibles avec un traitement en temps réel d'images prises à une cadence supérieure à 10 images par seconde. Le besoin de rapidité est, dans des applications embarquées, lié au besoin de rapidité d'identification ou d'authentification d'un utilisateur par son iris, dont la sélection d'une image nette constitue une étape préalable.

Un autre inconvénient est la complexité en termes de taille du programme nécessaire à l'exécution de l'algorithme d'évaluation de netteté.

Un autre problème est, pour gagner du temps et de la complexité de procédé, de limiter la zone devant être examinée en netteté. En particulier, la faible profondeur de champ associée au fait que l'oeil est sphérique et que des éléments tels que les cils peuvent être inclus dans l'image rend cette localisation de zone importante pour évaluer la netteté de l'iris et pas celle d'autres zones de l'image.

Un autre problème qui se pose pour la détermination de netteté d'images d'iris, ou plus généralement d'une zone particulière d'une image prise à faible profondeur de champ et acquise à faible distance, est lié à la présence de zones externes à la zone à évaluer (par exemple, des cils) qui peuvent être nets alors que l'iris de l'est pas. Ce problème est notamment présent dans des opérateurs ou algorithmes prenant en compte des gradients de luminosité, ce qui revient à tenir plus compte des contours que des zones elles-mêmes. En particulier, c'est un inconvénient d'un opérateur ou algorithme classique connu sous la dénomination de "Filtre médian pondéré sélectif en fréquence" ou opérateur FSWM (Frequency Selective Weighted Median) qui est par ailleurs reconnu comme un opérateur donnant des résultats acceptables.

Un autre problème, qui se pose également pour l'évaluation de netteté de zones d'images prises à faible distance et à faible profondeur de champ est lié à l'illumination nécessaire du sujet pris. Pour des capteurs d'images d'oeil, il s'agit généralement d'une diode électroluminescente. Cette source lumineuse crée des taches spéculaires qui polluent l'évaluation de netteté. En particulier, l'opérateur FSWN cité ci-dessus peut être trompé par la présence de taches spéculaires qui ont tendance à masquer des gradients de luminosité provenant de l'iris par des gradients plus importants provenant de ces taches.

La présente invention vise à proposer un procédé et système de traitement d'images numériques qui pallie un ou plusieurs des inconvénients des procédés connus.

Plus particulièrement, l'invention vise à évaluer la netteté d'un iris d'un oeil ou équivalent.

L'invention vise également à sélectionner, parmi un ensemble d'images d'oeil ou analogue, celle qui est la plus nette.

L'invention vise également à proposer un procédé simplifié de localisation d'un iris ou analogue dans une image numérique d'oeil qui soit simple et peu gourmand en ressources de calcul.

L'invention vise, de façon indépendante, à permettre la localisation approximative d'une pupille ou analogue dans une image numérique de façon simple, rapide et peut gourmande en ressources de calculs.

L'invention vise, de façon indépendante, à déterminer un indice caractéristique de netteté d'une zone d'image numérique comportant des taches spéculaires.

L'invention vise également à rendre un opérateur à analyse de gradients de luminosité insensible à la présence de contours parasites dans la zone évaluée en netteté.

Pour atteindre ces objets et d'autres, la présente invention prévoit un procédé de détermination d'un indice caractéristique de la netteté d'une image numérique selon la revendication 1.

Des modes préférés de mise en oeuvre de la présente invention sont décrits dans les revendications dependantes 2-13.

L'invention prévoit également un système de détermination de la netteté d'une image numérique, selon la revendication 14.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 représente, de façon très schématique et sous forme de blocs, un exemple de système de reconnaissance d'iris auquel s'applique la présente invention ;

la figure 2 illustre, sous forme de blocs, un mode de mise en oeuvre du procédé de détermination de l'indice caractéristique de la netteté d'une image d'iris selon la présente invention ;

la figure 3 illustre, sous forme de blocs, un mode de mise en oeuvre du procédé de localisation d'iris selon la présente invention ; et

la figure 4 illustre, sous forme de blocs, un mode de mise en oeuvre du procédé de calcul de l'indice caractéristique de la netteté par recherche de gradients pondérés selon la présente invention.

Pour des raisons de clarté, seuls les éléments et étapes qui sont nécessaires à la compréhension de l'invention ont été représentés aux figures et seront décrits par la suite. En particulier, la structure d'un système de reconnaissance d'iris n'a pas été détaillée, l'invention pouvant être mise en oeuvre à partir d'un système classique, pourvu que celui-ci puisse être programmé pour mettre en oeuvre l'invention.

L'invention sera décrite par la suite en relation avec la sélection d'une image d'iris la plus nette parmi un ensemble d'images. Toutefois, celle-ci s'applique plus généralement à la détermination de netteté d'images ou de portions d'images numériques présentant les mêmes caractéristiques qu'une image d'iris et, notamment, d'images dans lesquelles un premier plan dont on souhaite déterminer la netteté est à une distance différente d'un arrière plan. De plus, bien que l'invention soit décrite en relation avec un exemple complet de procédé de détermination de netteté, certaines phases de ce procédé peuvent être mises en oeuvre séparément et sont, à elles seules, caractéristiques.

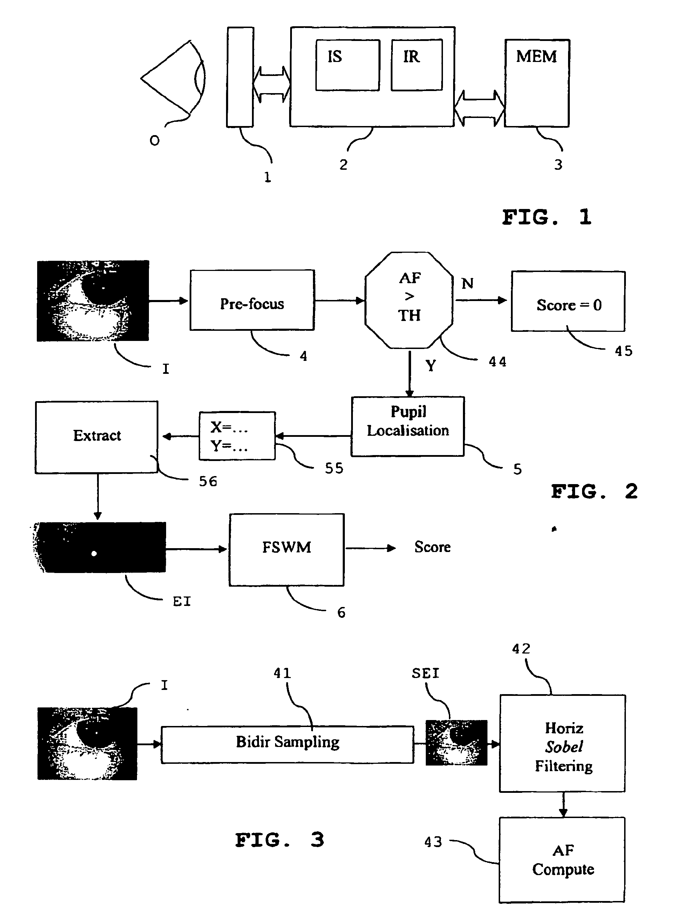

La figure 1 représente, de façon très schématique, un exemple de système de reconnaissance d'iris pouvant mettre en oeuvre le procédé de sélection selon la présente invention.

Un tel système est destiné à exploiter des images d'oeil pour effectuer une identification ou authentification par reconnaissance iridienne. Par exemple, un capteur numérique 1 prend un ensemble d'images d'un oeil O d'un sujet. Le nombre d'images prises est généralement d'au moins une dizaine pour permettre d'effectuer l'identification, après sélection de l'image la plus nette, en minimisant le risque de devoir demander au sujet de se soumettre à une nouvelle série de prises de vues. En variante, les images à analyser proviennent d'une source distante et sont, le cas échéant, préenregistrées.

Le capteur 1 est relié à une unité centrale 2 de traitement dont le rôle est, notamment, de mettre en oeuvre la reconnaissance d'iris (bloc IR) proprement dite après avoir sélectionné (bloc IS), parmi l'ensemble d'images stocké dans une mémoire 3, l'image IN la plus nette à soumettre au procédé de reconnaissance. Le procédé de sélection se base sur la détermination, pour chaque image de l'ensemble, d'un indice caractéristique de sa netteté. Cette détermination est, selon l'invention, effectuée au moyen du procédé dont un mode de mise en oeuvre préféré sera décrit en relation avec la figure 2. L'unité 2 sert généralement aussi à contrôler l'ensemble des constituants du système et, notamment, le capteur 1 et la mémoire 3.

La figure 2 illustre, de façon très schématique et sous forme de blocs, un mode préféré de mise en oeuvre du procédé de détermination de netteté selon la présente invention.

Le procédé de la figure 2 comprend trois phases distinctes et caractéristiques qui seront décrites successivement en relation avec le traitement d'une image de l'ensemble à évaluer, sachant que toutes les images de l'ensemble sont traitées, de préférence successivement, par ce procédé. La sélection de l'image à laquelle a été attribué l'indice le plus élevé est effectuée, par exemple, par simple comparaison des indices de netteté attribués, au moyen d'une étape de recherche de l'indice maximum en elle-même classique.

Une première phase (bloc 4, Pre-focus) de prétraitement a pour objectif d'éliminer les images très floues (plus précisément d'attribuer un indice de netteté nul) qui seront de toute évidence inappropriées pour la reconnaissance d'iris. Selon l'invention, cette phase effectue une recherche de forts gradients de luminance dans la direction horizontale (correspondant arbitrairement à la direction générale des paupières de l'oeil). De tels gradients sont liés à la présence de cils, de transitions brutales de niveaux de gris entre la pupille et l'iris, entre l'iris et le blanc de l'oeil, entre le blanc de l'oeil et le coin des paupières, etc. Plus les transitions brutales sont nombreuses, plus l'image est nette. Comme il s'agit ici d'effectuer un prétraitement grossier, la recherche de gradients s'effectue de préférence sur une image approximative, c'est-à-dire, sous-échantillonnée.

La figure 3 illustre, de façon schématique et sous forme de blocs, un mode de mise en oeuvre de la phase de prétraitement 4.

L'image d'origine I est d'abord sous-échantillonnée (bloc 41, Bidir Sampling) dans les deux directions, de préférence avec un même facteur. Par exemple, le rapport de sous-échantillonnage est de 4 dans les deux directions, ce qui revient à approximer l'image avec un facteur 16.

L'image SEI issue de l'étape 41 est alors soumise à un filtrage (bloc 42, Horiz Sobel Filtering) dans une seule direction, de préférence horizontale pour correspondre à la direction des lignes principales de l'image. Le filtrage a pour objet de calculer le gradient horizontal en chaque pixel, donc de détecter les contours verticaux.

Par exemple, il s'agit d'un filtrage monodirectionnel connu sous le nom de "Sobel". Un tel opérateur de filtrage est décrit, par exemple, dans l'ouvrage "Analyse d'images : filtrage et segmentation" de J-P. Cocquerez et S. Phillip, publié en 1995 par Masson (ISBN 2-225-84923-4).

L'image résultant du filtrage est alors soumise à un opérateur de calcul (bloc 43, AF Compute) de l'indice approximatif de netteté AF. De façon simplifiée, cet opérateur se contente de calculer la somme des intensités des pixels de l'image filtrée. Plus l'indice AF est élevé, plus l'image est nette.

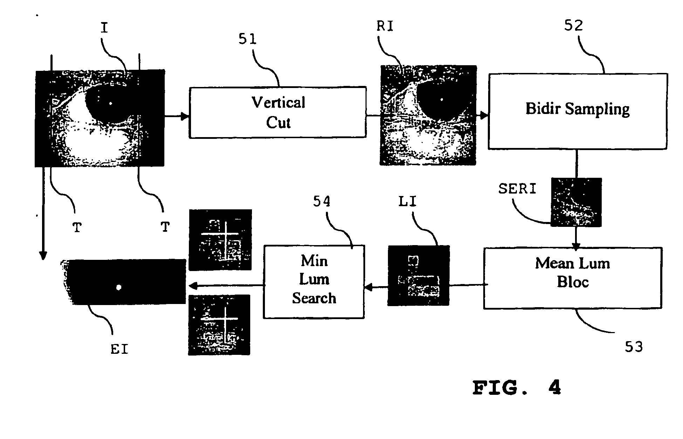

L'indice AF calculé par le bloc 4 est comparé (bloc 44, figure 2, AF>TH) à un seuil de netteté prédéterminé TH. Si l'indice obtenu est supérieur au seuil, le processus de détermination de netteté se poursuit par une deuxième phase de centrage de l'iris qui sera décrite ci-après en relation avec la figure 4. Dans le cas contraire, l'image est rejetée (bloc 45, Score = 0) pour n'être pas assez nette.

La deuxième phase 5 (Pupil Localisation) consiste à localiser la pupille de l'oeil dans l'image pour centrer la pupille (donc l'iris) dans une image à analyser. Cette localisation poursuit plusieurs objectifs. Un premier objectif est de concentrer ultérieurement l'évaluation de netteté sur la zone significative. Un deuxième objectif est d'éviter que des zones de l'image à forts gradients (notamment les cils) qui ne sont pas dans le même plan que l'iris soient prises en compte dans l'évaluation de netteté, et faussent alors cette évaluation.

Diverses méthodes de localisation sont envisageables. Par exemple une méthode basée sur une transformée de Hough associée à des opérateurs intégro-différentiels, décrite dans l'article "Person identification technique using human iris recognition" de C. Tisse, L. Martin, L. Torres et M. Robert, publié à l'occasion de la conférence VI'02 de Calgary en mai 2002, est très performante.

Toutefois, elle est gourmande en ressources et son temps d'exécution n'est donc pas forcément compatible avec un traitement en temps réel. De plus, pour une évaluation de la netteté, la localisation requise n'est qu'approximative.

La figure 4 illustre, sous forme de blocs et schématiquement, un mode de mise en oeuvre préféré de la phase de localisation de la pupille selon l'invention.

Partant de l'image d'origine I, on commence par éliminer des bandes latérales de cette image (bloc 51, Vertical Cut). Cette élimination a pour but de ne pas tenir compte par la suite des bords sombres (délimités par les traits T sur l'image I) de l'image sur ses côtés. Si l'oeil est correctement centré dans l'image, ces bandes proviennent de la courbure de l'oeil qui entraîne un moindre éclairement des bords. La taille (largeur) des bandes éliminées dépend de la résolution et de la taille de l'image d'origine. Chaque bande est, par exemple, d'une largeur comprise entre un vingtième et un cinquième de la largeur de l'image.

L'image réduite RI obtenue est ensuite optionnellement soumise à un sous-échantillonnage (bloc 52, Bidir Sampling) dans les deux directions. Par exemple, le sous-échantillonnage est effectué dans le même rapport que pour la phase de prétraitement décrite en relation avec la figure 3.

On calcule alors (bloc 53, Mean Lum Bloc) la luminance moyenne de blocs de l'image réduite sous-échantillonnée SERI, la taille d'un bloc correspondant à peu près à la taille attendue de la pupille dans une image évaluée. Cette taille est parfaitement déterminable dans la mesure où les images traitées sont généralement prises en respectant une certaine plage de distances entre le capteur et l'oeil.

Le calcul s'effectue en déplaçant une fenêtre de calcul avec un pas inférieur à la taille d'un bloc. Les blocs se chevauchent, le pas dans les deux directions entre deux blocs voisins étant, de préférence, compris entre un dixième et trois quarts de la taille d'un bloc.

Par exemple, pour des images de 644*484 pixels dans lesquelles les pupilles s'inscrivent dans des surfaces comprises entre environ 50*50 pixels et environ 70*70 pixels, la luminance est calculée pour des blocs de 15*15 pixels (avec un facteur de sous-échantillonnage de 4 dans chaque direction) en parcourant l'image avec un déplacement de la fenêtre de calcul de 2 à 5 pixels à chaque fois. On obtient alors une image LI de valeurs de luminance des différents blocs.

Dans cette image, on recherche (bloc 54, Min Lum Search) le bloc ayant la luminance minimale. Ce bloc correspond approximativement à celui contenant la pupille (ou la plus grande partie de la pupille). En effet, la pupille est la région la plus foncée.

Dans le cas où le sous-échantillonnage est omis, le nombre de blocs dont il faut calculer la luminance moyenne est plus élevé. On réduit toutefois le pas de déplacement de la fenêtre de calcul (par exemple, tous les 8 à 20 pixels).

Une fois la pupille localisée approximativement par ses coordonnées cartésiennes (X, Y) dans l'image (bloc 55, figure 2), on reprend l'image I d'origine pour en extraire (bloc 56, Extract) une image allongée EI ayant la forme d'une bande horizontale centrée sur la position approximative de la pupille et d'une hauteur correspondant au diamètre moyen attendu d'une pupille à l'échelle des images évaluées. Le fait que tout l'iris ne soit pas reproduit dans cette portion d'image n'est ici pas gênant. En effet, il ne s'agit pas d'une analyse de l'iris en vue de sa reconnaissance, mais simplement d'une évaluation de sa netteté. Cette netteté sera au moins à peu près la même sur tout le pourtour de la pupille et une analyse dans une bande réduite contenant l'iris de part et d'autre de la pupille suffit.

La forme allongée de la bande sélectionnée permet de tenir compte du fait que l'oeil est souvent en partie fermé lors de la prise de vue. Cela permet alors de minimiser des contours non pertinents (cils, paupières).

Bien qu'une image allongée et rectangulaire constituant la fenêtre d'examen de netteté constitue le mode de réalisation préféré, il n'est pas exclu de prévoir une fenêtre d'examen ovale, voire carrée ou ronde. Dans le cas d'une fenêtre carrée ou ronde, on veillera alors à la dimensionner pour qu'elle contienne, autour de la pupille, une zone suffisante d'iris pour l'évaluation de la netteté. Cette zone devra cependant être préférentiellement dépourvue de contours tels que ceux des paupières, par exemple en s'assurant que l'oeil soit grand ouvert lors de la prise d'images.

L'attribution d'un indice caractéristique de netteté à l'image s'effectue alors, selon l'invention, dans une troisième phase (bloc 6, FSWM), sur la base de l'image allongée EI, issue de l'étape précédente.

Selon l'invention, on met en oeuvre un opérateur de type FSWM amélioré pour traiter les images susceptibles de contenir des taches spéculaires.

En fait, un opérateur FSWM calcule, pour tous les pixels de l'image (ici l'image allongée EI), la somme de la norme quadratique des gradients horizontaux et verticaux de médianes de valeurs de luminance. Cela revient à appliquer la formule suivante :

$$\sum_{i=0, j=0}^{i=n, j=m} (gradV(i, j))^2 + (gradH(i, j))^2 \quad ,$$

avec :

$$gradV(i, j) = Med[Lum(i, j), Lum(i + 1, j), Lum(i + 2, j)]$$
$$- Med[Lum(i, j), Lum(i - 1, j), Lum(i - 2, j)] ,$$

et

$$gradH(i, j) = Med[Lum(i, j), Lum(i, j + 1), Lum(i, j + 2)]$$
$$- Med[Lum(i, j), Lum(i, j - 1), Lum(i, j - 2)] ,$$

où Lum(i,j) représente l'intensité lumineuse du pixel de coordonnées (i,j) dans l'image EI de taille n*m, et où Med désigne la fonction médiane, c'est-à-dire dont le résultat correspond à la valeur médiane des luminances des pixels de l'ensemble auquel est appliquée la fonction.

Un opérateur FSWM tel que décrit ci-dessus est exposé, par exemple dans l'article "New autofocusing technique using the frequency selective weighted median filter for video cameras" de K.S. Choi, J.S. Lee et S.J. Ko, paru dans la revue IEEE Trans. On Consumers Electronics, Vol. 45, No. 3, août 1999.

Selon l'invention, la somme n'est pas effectuée sur tous les pixels de l'image mais est limitée à certains pixels choisis de la façon caractéristique suivante.

Pour que la norme quadratique d'un gradient de la médiane d'un pixel de l'image soit prise en compte dans la somme fournissant l'indice de netteté, il faut selon l'invention au moins que les intensités lumineuses respectives des pixels à une certaine distance prédéterminée du pixel dont on calcule les gradients soient inférieures à un premier seuil de luminance prédéterminé. Cela revient à ne pas tenir compte (ne pas accumuler dans l'équation de sommation de l'opérateur FSWM) des gradients verticaux des pixels de coordonnées (i,j) pour lesquels Lum(i,j+k)>SAT1, ou Lum(i,j-k)>SAT1, et des gradients horizontaux des pixels pour lesquels Lum(i+k,j)>SAT1, ou Lum(i-k,j)>SAT1. Le nombre k (par exemple compris entre 2 et 10) est choisi en fonction de la résolution des images pour correspondre à la taille moyenne de la transition entre une tache spéculaire et l'iris. Le seuil SAT1 est choisi pour correspondre au niveau de gris pour lequel on considère que l'image est saturée.

La condition ci-dessus permet d'éliminer les pixels faisant partie d'une transition entre une éventuelle tache spéculaire présente dans l'image EI et le reste de l'oeil. On ne tient donc pas compte, pour la détermination de l'indice de netteté, des pixels qui apportent des gradients non pertinents.

De préférence, on ajoute comme condition que les gradients horizontaux ou verticaux doivent être, en valeur absolue, inférieurs à un seuil de gradient GTH. Dans l'iris, les gradients sont relativement faibles. Par contre, cela permet de ne pas tenir compte des gradients provenant notamment des cils. La détermination du seuil GTH dépend du contraste des images et doit être inférieur à la moyenne des gradients attendus pour des cils.

De préférence, l'intensité lumineuse du pixel doit être inférieure à un deuxième seuil de luminance prédéterminé SAT2. Le seuil SAT2 est choisi pour être supérieur à l'intensité lumineuse attendue pour l'iris qui est généralement relativement sombre (notamment par rapport au blanc de l'oeil).

En variante, c'est directement la norme quadratique des gradients que l'on compare au seuil GTH (choisi alors en conséquence). Effectuer le test sur le gradient avant son élévation au carré permet cependant de gagner du temps de calcul pour tous les gradients éliminés.

Le respect de toutes les conditions ci-dessus correspond à un mode de réalisation préféré qui peut être exprimé de la façon suivante dans une description algorithmique.

$$Sc = 0, NbPix = 0$$

Pour tous les pixels de l'image allongée recadrée EI parcourue, par exemple, dans un balayage ligne (j de 1 à m, pour chaque i de 1 à n) :

Si[Lum(i,j+k)<SAT1 ET Lum(i,j-k)<SAT1 ET Lum(i,j)<SAT2 ET |Gradv (i,j) | <GTH], alors $Sc = Sc + (GradV(i,j))^2$ et NbPix = NbPix + 1 ;

Si[Lum(i+k, j)<SAT1 ET Lum(i-k, j)<SAT1 ET Lum(i,j)<SAT2 ET |GradH (i,j)|<GTH], alors $Sc = Sc + (GradH(i,j))^2$ et NbPix = NbPix + 1 ;

j suivant ;

i suivant.

Une fois tous les pixels traités, on calcule l'indice "Score" de netteté attribué à l'image comme étant

$$Score = Sc/NbPix.$$

Cette pondération permet de rendre les indices des différentes images ultérieurement comparables les uns aux autres.

De préférence, dans l'application de l'opérateur ci-dessus, les gradients verticaux et horizontaux ne sont, même pour les tests conditionnels par rapport au seuil GTH, préférentiellement calculés que si les trois premières conditions (Lum(i+k,j)<SAT1 ET Lum(i-k,j)<SAT1 ET Lum(i,j)<SAT2) relatives aux intensités lumineuses sont vérifiées.

On voit donc que de nombreux gradients ne sont pas pris en compte dans la somme d'obtention de l'indice, et ne sont même pas calculés. Un avantage est alors un gain de temps considérable pour la détermination de l'indice de netteté de l'image.

Un autre avantage est que les taches spéculaires éventuelles ne polluent plus l'évaluation de la netteté de l'image.

De façon plus générale, la présente invention minimise le nombre de calculs à effectuer sur les pixels d'une image dont on souhaite déterminer la netteté.

Un autre avantage de l'invention est que, par rapport à un outil équivalent mettant en oeuvre des procédés classiques de calcul de netteté, l'invention est plus rapide pour déterminer les indices caractéristiques de netteté d'un ensemble d'images.

Un autre avantage de l'invention est que, tout en simplifiant et en rendant plus rapides les traitements numériques appliqués aux images, elle est plus fiable que les méthodes connues pour ce qui concerne l'évaluation de netteté.

On rappellera que si l'invention a été décrite en relation avec la sélection d'une image dans laquelle l'iris est le plus net parmi un ensemble d'images numériques d'oeil, elle s'applique plus généralement à des images analogues en forme et/ou en caractéristiques. De plus, certaines phases caractéristiques du procédé exposé peuvent trouver des applications sans être inclues dans le procédé global et résoudre des problèmes propres, susceptibles de se présenter dans d'autres chaînes de traitement.

En particulier, la localisation de la pupille dans une image d'oeil présente des avantages propres et permet, à elle seule, de résoudre des problèmes et inconvénients d'autres processus de localisation utilisés dans d'autres procédés et notamment dans les procédés d'identification et d'authentification proprement dits. Un autre exemple d'application concerne la détection des mouvements du regard d'une personne dans des images animées (suivi du regard). Là encore, la rapidité avec laquelle l'invention permet la localisation approximative est compatible avec le traitement en temps réel d'images animées.

Par ailleurs, la phase de détermination de l'indice caractéristique de netteté lui-même, en ce qu'elle simplifie un opérateur FSWM connu, peut trouver d'autres applications dans des procédés d'analyse de textures diverses pour lesquels se posent des problèmes similaires et notamment, quand on souhaite ne pas tenir compte d'éventuels reflets très lumineux. Dans de telles applications, un procédé de détermination de l'indice caractéristique de la netteté d'une image présente des caractéristiques indépendantes des autres phases décrites, à titre d'exemple d'application, dans la présente description.

Bien entendu, la présente invention est susceptible de diverses variantes et modifications qui apparaîtront à l'homme de l'art. En particulier, sa mise en oeuvre de façon logicielle en utilisant des outils connus est à la portée de l'homme du métier à partir des indications fonctionnelles données ci-dessus. De plus, les seuils, tailles de blocs, facteur de réduction ou de sous-échantillonnage, etc. seront choisis en fonction de l'application et du type d'images dont on souhaite déterminer la netteté, et leur détermination est la portée de l'homme du métier.

## Revendications

**1.** Procédé de détermination d'un indice caractéristique de la netteté d'une image numérique (EI), **caractérisé en ce qu'**il consiste à cumuler (6) la norme quadratique de gradients horizontaux et verticaux de valeurs de luminance de pixels de l'image, le gradient vertical, respectivement horizontal, d'un pixel étant pris en compte dans le cumul uniquement si les luminances de deux pixels encadrant le pixel courant en étant distant de celui-ci d'un écart prédéterminé dans la direction concernée sont inférieures à un premier seuil de luminance.

**2.** Procédé selon la revendication 1, **caractérisé en ce que** ledit indice est obtenu en divisant le cumul par le nombre de normes quadratiques cumulées.

**3.** Procédé selon la revendication 1 ou 2, **caractérisé en ce que** ledit premier seuil est choisi en fonction de la luminosité attendue d'éventuelles taches spéculaires dont on souhaite ne pas tenir compte.

**4.** Procédé selon l'une quelconque des revendications 1 à 3, **caractérisé en ce que** l'écart entre le pixel courant et chacun des pixels qui l'encadrent est choisi en fonction de la taille attendue d'éventuelles taches spéculaires dont on souhaite ne pas tenir compte.

**5.** Procédé selon l'une quelconque des revendications 1 à 4, **caractérisé en ce que** la norme quadratique d'un gradient est pris en compte dans le cumul seulement si sa valeur est inférieure à un seuil de gradient prédéterminé.

**6.** Procédé selon la revendication 5, **caractérisé en ce que** le seuil de gradient est choisi en fonction du contraste de l'image.

**7.** Procédé selon l'une quelconque des revendications 1 à 6, **caractérisé en ce qu'**un pixel courant est sélectionné pour être pris en compte dans le cumul, seulement si sa luminance est inférieure à un deuxième seuil de luminance.

**8.** Procédé selon la revendication 7, **caractérisé en ce que** le deuxième seuil de luminance est choisi pour être supérieur à l'intensité lumineuse attendue d'un élément caractéristique contenu dans l'image numérique (EI).

**9.** Procédé selon l'une quelconque des revendications 1 à 8, **caractérisé en ce que** l'image est une image d'oeil.

**10.** Procédé selon la revendication 9 dans son rattachement à la revendication 8, **caractérisé en ce que** ledit élément est l'iris de l'oeil.

**11.** Procédé selon l'une quelconque des revendications 1 à 10, **caractérisé en ce qu'**il est appliqué à une ou plusieurs images d'un ensemble d'images numériques représentant un même objet.

**12.** Procédé selon la revendication 11, **caractérisé en ce qu'**il n'est appliqué qu'aux images de l'ensemble ayant passées avec succès un test (44) de netteté approximative basé sur un cumul des gradients dans une seule direction des intensités lumineuses des pixels de l'image.

**13.** Procédé selon la revendication 11 ou 12, **caractérisé en ce que** l'indice affecté à chaque image est utilisé pour sélectionner l'image la plus nette parmi ledit ensemble.

**14.** Système de détermination de la netteté d'une image numérique, **caractérisé en ce qu'**il comprend des moyens pour mettre en oeuvre le procédé selon l'une quelconque des revendications 1 à 13.

**Claims**

**1.** A method for determining a score characteristic of the definition of a digital image (EI), **characterized in that** it consists of cumulating (6) the quadratic norm of horizontal and vertical gradients of luminance values of pixels of the image, the vertical, respectively horizontal, gradient of a pixel being taken into account in the cumulated total only if the luminances of two pixels surrounding the current pixel while being distant therefrom by a predetermined interval in the concerned direction are smaller than a first luminance threshold.

**2.** The method of claim 1, **characterized in that** said score is obtained by dividing the cumulated total by the number of cumulated quadratic norms.

**3.** The method of claim 1 or 2, **characterized in that** said first threshold is chosen according to the expected luminosity of possible specular spots which are desired not to be taken into account.

**4.** The method of any of claims 1 to 3, **characterized in that** the interval between the current pixel and each of the pixels surrounding it is chosen according to the expected size of possible specular spots which are desired not to be taken into account.

**5.** The method of any of claims 1 to 4, **characterized in that** the quadratic norm of a gradient is taken into account in the cumulated total only if its value is smaller than a predetermined gradient threshold.

**6.** The method of claim 5, **characterized in that** the gradient threshold is chosen according to the image contrast.

**7.** The method of any of claims 1 to 6, **characterized in that** a current pixel is selected to be taken into account in the running total only if its luminance is smaller than a second luminance threshold.

**8.** The method of claim 7, **characterized in that** the second luminance threshold is chosen to be greater than the expected light intensity of a characteristic element contained in the digital image (EI) .

**9.** The method of any of claims 1 to 8, **characterized in that** the image is an eye image.

**10.** The method of claims 9 as attached to claim 8, **characterized in that** said element is the iris of the eye.

**11.** The method of any of claims 1 to 10, **characterized in that** it is applied to one or several images of a set of digital images representing a same object.

**12.** The method of claim 11, **characterized in that** it is only applied to the images in the set which have successfully passed an approximate definition test (44) based on the cumulating of the gradients in a single direction of the light intensities of the image pixels.

**13.** The method of claim 11 or 12, **characterized in that** the score assigned to each image is used to select the clearest image from said set.

**14.** A system for determining the definition of a digital image, comprising means for implementing the method of any of claims 1 to 13.

**Patentansprüche**

**1.** Ein Verfahren zum Bestimmen einer Auswertungscharakteristik für die Definition eines digitalen Bildes (EI), **dadurch gekennzeichnet, dass** es aus dem Kumulieren (6) des quadratischen Betrags der horizontalen und vertikalen Gradienten von Leuchtkraftwerten bzw. Luminanzwerten der Pixel des Bildes besteht, wobei der vertikale bzw horizontale Gradient eines Pixels in der kumulierten Summe nur in Betracht gezogen wird, wenn die Luminanzen der zwei Pixel, die das aktuelle Pixel umgeben, während sie davon mit einem vorbestimmten Intervall in der betroffenen Richtung beabstandet sind, kleiner sind, als eine erste Luminanzschwelle.

**2.** Verfahren nach Anspruch 1, **dadurch gekennzeichnet, dass** die Auswertung durch Teilen der kumulierten Summe durch die Anzahl der kumulierten quadratischen Beträge erhalten wird,

**3.** Verfahren nach Anspruch 1 oder 2, **dadurch gekennzeichnet, dass** die erste Schwelle gemäß der erwarteten Helligkeit der möglichen spiegelnden Punkte bzw Spots, die nicht in Betracht gezogen werden sollen.

**4.** Verfahren nach einem der Ansprüche 1 bis 3, **dadurch gekennzeichnet, dass** das Intervall zwischen dem aktuellen Pixel und jedem der Pixel, das es umgibt, gemäß der erwarteten Größe der möglichen spiegelnden Spots ausgewählt wird, die nicht in Betracht gezogen werden sollen,

**5.** Verfahren nach einem der Ansprüche 1 bis 4, **dadurch gekennzeichnet,dass** der quadratische Betrag eines Gradienten nur dann in der kumulierten Summe in Betracht gezogen wird, wenn sein Wert kleiner als eine vorbestimmte Gradientenschwelle ist.

**6.** Verfahren nach Anspruch 5. **dadurch gekennzeichnet, dass** die Gradientenschwelle gemäß dem Bildkontrast ausgewählt wird

**7.** Verfahren nach einem der Ansprüche 1 bis 6, **dadurch gekennzeichnet, dass** ein aktuelles Pixel nur dann ausgewählt wird, um in der Laufenden Summe in Betracht gezogen zu werden, wenn seine Leuchtkraft kleiner als eine zweite Luminanzschwelle ist.

**8.** Verfahren nach Anspruch 7, **dadurch gekennzeichnet, dass** die zweite Luminanzschwelle größer als die erwartete Lichtintensität eines charakteristischen Elements, das in den digitalen Bild (EI) enthalten ist, ausgewählt wird.

**9.** Verfahren nach einem der Ansprüche 1 bis 8, **dadurch gekennzeichnet, dass** das Bild ein Augenbild ist.

**10.** Verfahren nach Anspruch 9, in Kombination mit Anspruch 8, **dadurch gekennzeichnet, dass** das Element die Iris des Auges ist

**11.** Verfahren nach einem der Ansprüche 1 bis 10, **dadurch gekennzeichnet, dass** es auf ein oder mehrere Bilder eines Satzes von digitalen Bildern, die das gleiche Objekt darstellen, angewandt wird.

**12.** Verfahren nach Anspruch 11, **dadurch gekennzeichnet, dass** es nur auf die Bilder in dem Satz, der erfolgreich einen Näherungs-Definitionstest (44) basierend auf dem Kumulieren der Gradienten in einer einzelnen Richtung der Lichtintensitäten der Bildpixel bestanden haben, angewandt wird

**13.** Verfahren nach Anspruch 11 oder 12, **dadurch gekennzeichnet, dass** die Auswertung, die jedem Bild zugeordnet ist, benutzt wird, um das klarste Bild von dem Satz auszuwählen,

**14.** Ein System zum Bestimmen der Definition eines digitalen Bildes, das Mittel zum implementieren des Verfahrens nach einem der Ansprüche 1 bis 13 aufweist.

**FIG. 1**

**FIG. 2**

**FIG. 3**

**FIG. 4**